# EUROPÄISCHE PATENTSCHRIFT

(11) **EP 1 988 228 B1**
(45) Veröffentlichungstag und Bekanntmachung des Hinweises auf die Patenterteilung: **15.04.2020**
(21) Anmeldenummer: 08155583.1
(22) Anmeldetag: 02.05.2008
(51) Int. Cl.: E04B 2/16, B29L 31/10, B28B 1/00, B28B 11/04, B29K 25/00, B29C 44/18, B29C 44/44, E04B 2/02, E04C 1/41, C04B 30/00, E04C 2/284

(54) **Bausteine und Bausysteme mit hydrophober, mikropröser Wärmedämmung und Verfahren zur Herstellung**
Building blocks and building systems with hydrophobic, microporous heat insulation and method of fabrication
Blocs et systèmes de construction avec isolation thermique hydrophobe et microporeuse et méthode de fabrication

(30) Priorität: 03.05.2007 DE 102007020716; 04.09.2007 DE 102007042000; 18.09.2007 DE 202007013074 U; 27.01.2008 DE 102008005548; 30.10.2007 DE 102007051830
(43) Veröffentlichungstag der Anmeldung: 05.11.2008
(73) Patentinhaber: Evonik Operations GmbH, 45128 Essen (DE)
(72) Erfinder: Rimmele, Matthias, 89584 Ehingen (DE); Borchert, Gerd, 87471 Durach (DE); Kratel, Günter, Dr., 87471 Durach (DE)
(74) Vertreter: Evonik Patent Association

(56) Entgegenhaltungen:
- EP-A- 0 032 176
- EP-A- 1 557 249
- EP-A- 1 752 593
- EP-A1- 0 002 487
- EP-A1- 1 304 315
- DE-A1- 4 432 387
- DE-A1- 10 315 649

## Beschreibung

Die Erfindung betrifft eine hydrophobe mikroporöse Wärmedämmung und deren Anwendung bei Bausteinen sowie ein Verfahren zum Herstellen solcher Bausteine.

### Hintergrund der Erfindung:

Die Wärmedämmung zur Einsparung von Energie hat im Rahmen des Bewusstwerdens für nachhaltige Entwicklung und der Verteuerung von Energien einen hohen Stellenwert erhalten. Der Wärmedämmung kommt vor dem Hintergrund steigender Energiepreise, bei knapper werdenden Ressourcen, dem Streben nach einer Reduzierung des CO₂-Ausstoßes, der Notwendigkeit nachhaltiger Reduzierung des Energiebedarfs sowie auch zukünftig noch steigenden Anforderungen an den Wärme- und Kälteschutz eine immer höhere Bedeutung zu. Diese steigenden Anforderungen an eine Optimierung des Wärmedämmschutzes, gelten im gleichen Maß sowohl bei Gebäuden, z. B. für Neubauten oder für Bauten im Bestand, als auch für Kälteisolierungen im mobilen, logistischen und im stationären Bereich.

### Stand der Technik:

Baustoffe wie Stahl, Beton, Ziegelwerk und Glas, aber auch Natursteine sind relativ gute Wärmeleiter, so dass die daraus errichteten Außenwände von Gebäuden bei kalter Witterung sehr schnell die Wärme von der Innenseite an die Außenseite abgeben.

Die Entwicklung geht daher zum einen zur Verbesserung der Isolationseigenschaften durch Steigerung der Porosität dieser Baustoffmaterialien, wie z.B. bei Beton und Ziegelwerk, und zum anderen zur Verkleidung der Außenwände mit Wärmedämmstoffmaterialien.

Die heute vornehmlich verwendeten Wärmedämm- bzw. Isolierstoffe sind Materialien mit geringer Wärmeleitung. Gebräuchlich sind:
Organische Wärmedämmstoffe
   - Geschäumte Kunststoffe wie Polystyrol, Neopor, Polyurethan
   - Holzfaserwerkstoff wie Holzwolle und Kork
   - pflanzliche oder tierische Fasern wie z.B. Hanf, Flachs, Wolle
Anorganische Wärmedämmstoffe
   - Mineral- und Glaswolle, Schaumglas in Plattenform
   - Kalzium-Silikat- und Gipsplatten
   - mineralische Schäume wie Porenbeton, Bimsstein, Perlite und Vermiculite

Diese aufgeführten herkömmlichen Wärmedämmstoffe werden, vornehmlich in Form von geschäumten oder verpressten Platten und Formkörpern, allein oder mit anderen eingesetzt. So ist z.B. möglich, die Polyurethane und Polystyrole direkt in die Hohlräume der Bausteine einzuschäumen (DE 8 504 737/U1) oder nach DE 102 29 856 B4 als Maßplatten einzuführen. Nach DE 102 17548 A1 ist diese Technologie auch mit Mineralwollzuschnitten möglich. Alle diese Dämmungsausführungen zeigen allerdings folgende Schwächen im Detail:
Alle diese Stoffe haben für die heute geforderten hohen Ansprüche eine zu geringe Wärmedämmungseffektivität. Die Wärmeleitzahlen liegen durchgehend über 0,030 W/mK, haben daher einen hohen Raumbedarf und sind unter anderem in der Wärmedämmung nicht nachhaltig stabil.

### Weitere Nachteile sind:

- zu hohe Feuchtigkeitsaufnahme und Empfindlichkeit gegenüber Wasser
- zeit- und kostenaufwändige Anbringung an die Fassade (z.B. Kleben, Dübeln, Schrauben, Anbringen von Trägersystemen usw.; hierbei sind Wärmebrücken zum Teil vorprogrammiert)
- zusätzliche Verbundschichten z.B. zur Haftung von Verputzen
- bei organischen Isolierstoffen kommt die Brennbarkeit hinzu

Sehr gute Isolierwirkung zeichnen sogenannte Vakuumisolationspaneele, kurz VIP genannt, aus. Mit einer Wärmleitfähigkeit von etwa 0,004 bis 0,008 W/mK (je nach Kernmaterial und Unterdruck), weisen die Vakuumisolationspaneele eine 8 bis 25 mal bessere Wärmdämmwirkung wie konventionelle Wärmedämmsysteme aus. Sie ermöglichen daher schlanke Konstruktionen mit optimaler Wärmdämmung die sowohl im Baubereich, als auch im Haushaltsgeräte-, Kühl- und Logistikbereich eingesetzt werden können.

Vakuumisolationspaneele auf Basis mikroporöser Wärmedämmstoffe, Polyurethanschaumplatten und gepressten Fasern als Kernmaterial mit Verbundfolien (z.B. Aluminiumverbundfolien bzw. sog. Metallisierten) sind allgemein bekannt und hinlänglich beschrieben (vgl. hierzu VIP-Bau.de)

Diese VIP-Technologie weist aber folgende gravierende Nachteile auf:
- Wenn diese evakuierten Paneele durch Beschädigungen belüftet werden, so bedeutet dies das Ende der sehr guten Wärmedämmung. Die Isolierwirkung entspricht dann nur mehr der der eingesetzten Kernmaterialien
- Die Lebensdauer ist durch die Diffusion von Gasen durch die Barriere bzw. Hülle in die Vakuumpaneele, zeitlich begrenzt.
- Bei kleinen Einheiten werden, durch Bildung von Wärmebrücken, die guten Dämmeigenschaften weitgehend wieder aufgehoben.

Für den Bausektor gelten speziell noch folgende Nachteile:
- Durch die notwendigen, nahezu gasundurchlässigen Barrieren sind die Paneele nicht atmungsaktiv.
- Handling und Verarbeitbarkeit vor Ort insbesondere auf Baustellen sind schwierig, bzw. nicht möglich.

Aufgrund des Aufbaus der Folien ist eine Diffusion von Umgebungsgasen (hauptsächlich Stickstoff, Sauerstoff, CO2 und Wasserdampf) immer gegeben. Eine längere Lebensdauer ist somit nicht gegeben und vielmehr endlich.

Niedrige Wärmeleitzahlen weisen mikroporöse Wärmedämmstoffe auf Basis von pyrogener Kieselsäure auf (0,020 - 0,024 W/mK).

Pyrogene Kieselsäuren werden durch Flammenhydrolyse von flüchtigen Siliciumverbindungen wie z.B organischen und anorganischen Chlorsilanen hergestellt. Diese so hergestellten pyrogenen Kieselsäuren weisen eine hohe poröse Struktur auf und sind hydrophil.

Die Nachteile dieser mikroporösen Wärmedämmstoffe auf Basis pyrogener Kieselsäuren sind daher:
- Hohe Feuchtigkeitsaufnahme, damit steigende Wärmeleitzahlen und somit Nachlassen der Wärmedämmeigenschaften.
- Im Bausektor kann dies zusätzlich zu Schimmelbildung führen
- Bei Verwendung in Vakuumpaneelen kann durch die Feuchtigkeitsaufnahme ein Energietransport über Wassermoleküle stattfinden, welcher die Wärmeleitfähigkeit des Systems negativ beeinflussen kann.

DE 10315649 A1 offenbart ein Baustein ("Ziegelstein") und Bausystem ("Verbund"), umfassend eine Außen-, eine Innenschale und einen Dämmbereich. Dieser Dämmbereich (Vakuumdämmschicht) kann mikroporöses Kieselsäurepulver enthalten, dass hochtemperaturstabil bis 1000 °C ist. Der Dämmbereich kann außerdem eine Trittschall-Mineralfaserdämmung aufweisen, die hydrophob ausgestattet werden kann. DE 10315649 A1 offenbart außerdem ein Verfahren zur Herstellung eines Bausteins (Ziegelstein), beinhaltend die folgenden Schritte: a) Herstellen eines einschaligen oder zweischaligen Bausteins mit im verbauten Zustand vertikal verlaufenden Löchern gemäß einem vorgegebenen Lochbild; b) Einbringen des getrockneten und formgepressten Produkts in mindestens eines der Löcher.

EP 0032176 A beschreibt Wärmeisolationsmischungen und daraus gebildete Wärmedämmkörper, insbesondere für den Einsatz bei Temperaturen oberhalb von 950 °C. Es ist aus EP 0032176 A bekannt, mikroporöse Wärmedämmstoffe zu verwenden, die ohne Bindemittel zu Platten oder Formteilen verpresst werden und vor der Formgebung mit Organosilanen versetzt werden, wobei die Hydrophobierung der mikroporösen Wärmedämmstoffe stattfinden kann.

Der Erfindung liegt die Aufgabe zu Grunde, die Wärmedämmeigenschaften von Wärmedämmstoffen auf Basis mikroporöser Dämmstoffe wesentlich zu verbessern, nachhaltig auf hohem Niveau zu halten und durch Verdichtung oder Verpressung in anwendungstechnisch praktikable Formen zu bringen.

Die Aufgabe wird durch die Merkmale des Anspruches 1 gelöst.

Vorteilhafte Weiterbildungen ergeben sich aus den abhängigen Ansprüchen.

Ein Verfahren zum Herstellen solcher Bausteine ist in den Verfahrensansprüchen angegeben.

Der Erfindung liegt der Gedanke zugrunde, dass mikroporöse Wärmedämmstoffe im Wesentlichen aus hochdispersen, nanoskaligen Kieselsäuren, vorzugsweise pyrogenen Kieselsäuren, Trübungsmitteln und Fasern bestehen.

Es wurde nun aber gefunden, dass durch den Zusatz von Organosilanen während des Mischvorganges zur Herstellung mikroporöser Wärmedämmmaterialien, die obigen Ziele erreicht werden. Diese Mischung ist unmittelbar nach der Zugabe verform- und verpressbar. Die Zugabe der Silane geschieht in flüssigem oder gasförmigem Aggregatzustand. Wichtig ist eine intensive, homogene Durchmischung der Komponenten, damit die Reaktion (Hydrophobierung) von "Innen heraus" gewährleistet ist. Prinzipiell ist es möglich, die Silane auch den Einzelkomponenten wie Kieselsäuren, Trübungsmitteln und Ersatzstoffen zuzugeben.

Die Reaktion der Organosilane mit den Silanolgruppen der Kieselsäure findet dabei während des Pressvorganges oder unmittelbar danach statt. Die Reaktion kann, je nach Bedarf, durch Wärmezufuhr oder Wärmeabfuhr (Kühlung)und durch sog. Beschleuniger, das sind polare Substanzen wie Wasser, Alkohole oder Chlorwasserstoff, gegebenenfalls unter leichten Überdruck beschleunigt oder verzögert, also gesteuert werden. Überschussanteile oder Spaltprodukte des Hydrophobiervorganges werden anschließend bei Temperaturen von 70°C bis 130°C ausgeheizt.

Die resultierenden Platten oder Formteile sind materialdurchgängig nachhaltig hydrophob.

Diese erfindungsgemäß hergestellten Wärmedämmstoffe zeichnen sich aus durch folgende Eigenschaften:
- hervorragende, konstante Wärmedämmeigenschaften (0,014 - 0,020 W/mK) die somit deutlich besser als die hydrophiler mikroporöser Wärmedämmstoffe sind.
- wasserabstoßend, keine Feuchtigkeitsaufnahme
- wasserdampfdurchlässig
- keine Brennbarkeit (Brandklasse A)
- chemisch neutral/bauphysiologisch unbedenklich
- einfach und reproduzierbar in der Herstellung

Die erfindungsgemäß eingesetzten Organosilane haben gegenüber den herkömmlichen Hydrophobiermitteln wie Stearaten, Siliconaten, Wachsen und Fetten, usw., den entscheidenden Vorteil, dass sie leicht verdampfbar sind, und daher eine optimale Verteilung auf der Kieselsäureoberfläche und eine chemische Reaktion mit den vorhandenen Silanolgruppen der Kieselsäure eingehen. Somit werden die hydrophilen Silanolgruppen durch organophile hydrophobe Gruppen vollständig, andauernd und durchgängig ersetzt. Die Dampfdrücke der eingesetzten Organosilane liegen zwischen 20 und 250 hPa bei 20°C. Die Siedepunkte der einsetzbaren Organosilane liegen zwischen 40 und 130°C.

Erfindungsgemäß kann hierbei auf den Einsatz von Bindemitteln, mit den weiter unten (Hohlbausteine) beschriebenen negativen Eigenschaften vollkommen verzichtet werden.

Das erfindungsgemäße Kernmaterial besteht aus mikroporösen Wärmedämmstoffen, die als Basismaterial pyrogene Kieselsäuren und Siliciumdioxid-Aerogel enthalten. Hinzu kommen sog. Trübungsmittel, Fasern und/oder andere Füllstoffe.

Pyrogene Kieselsäuren werden durch Flammenhydrolyse von flüchtigen Siliciumverbindungen wie z.B organischen und anorganischen Chlorsilanen hergestellt. Diese pyrogenen Kieselsäuren weisen sich durch eine hohe poröse Struktur aus. Siliciumdioxid-Aerogelen werden durch spezielle Trocknungsverfahren von wässrigen Siliciumdioxidgelen hergestellt und weisen eine sehr hohe Porenstruktur auf und sind daher hoch wirksame Dämmstoffe.

Weitere Komponenten dieser Mischung sind Verbindungen, die Wärmestrahlen im Infrarotbereich adsorbieren, streuen und reflektieren können. Sie werden allgemein als Trübungsmittel bezeichnet. Vorzugsweise weisen diese Trübungsmittel im Infrarot-Spektralbereich ein Maximum zwischen 1,5 und 10 µm auf. Die Partikelgröße dieser Teilchen liegt vorzugsweise zwischen 0,5 - 15µm. Beispiele für derartige Substanzen sind Titanoxide, Zirkonoxide, Ilmenit, Eisentitanat, Eisenoxid, Zirkonsilikat, Siliciumcarbid, Manganoxid und Ruß.

Zur Armierung oder Bewehrung, also zur mechanischen Verstärkung, werden Fasern mit eingesetzt. Diese Fasern können anorganischen oder organischen Ursprungs sein.

Beispiele für anorganische Fasern sind Glaswolle, Steinwolle, Basalt-Fasern, Schlacken-Wolle und keramische Fasern, die aus Schmelzen von Aluminium und/oder Siliciumdioxid, sowie weiteren anorganischen Metalloxiden bestehen. Reine Siliciumdioxidfasern sind z.B.Silica-Fasern.

Organische Fasern sind z.B. Cellulosefasern, Textilfasern oder Kunststofffasern.

Zum Einsatz kommen folgende Dimensionen:
Durchmesser 1-12µm, bevorzugt 6-9µm; Länge 1-25 mm, bevorzugt 3-10 mm.

Aus technischen und wirtschaftlichen Gründen können der Mischung anorganische Füllmaterialien zugesetzt werden. Zum Einsatz kommen verschiedene, synthetisch hergestellte Modifikationen von Siliciumdioxid wie z.B. gefällte Kieselsäuren, Lichtbogenkieselsäuren,SiO₂-haltige Flugstäube, die durch Oxidationen von flüchtigem Siliciummonoxid, bei der elektrochemischen Herstellung von Silicium oder Ferrosilicium entstehen. Ebenso Kieselsäuren, die durch Auslaugen von Silikaten wie Calziumsilicat, Magnesiumsilicat und Mischsilicaten wie z.B. Olivin (Magnesium-Eisensilicat)mit Säuren hergestellt werden. Ferner kommen zum Einsatz natürlich vorkommende SiO2-haltige Verbindungen wie Diatomenerden und Kieselguren. Ebenfalls können zur Anwendung kommen: thermisch aufgeblähte Mineralien wie Perlite und Vermiculite. Je nach Bedarf können feinteilige Metalloxide wie Aluminiumoxid, Titandioxid, Eisenoxid zugesetzt werden.

Das Kernmaterial muss nicht nur Wasser abstoßen, sondern auch die Anlagerung und Aufnahme von Feuchtigkeit verhindern. Verursacher dieser Feuchtigkeitsaufnahme, sind auf der Kieselsäure platzierte Silanolgruppen, an denen sich das Wasser anlagert. Es ist bekannt (DE3037409 A1), Kernmaterialien, die aus geschäumten Perliten bestehen, mit Alkali- und/oder Erdalkalistearaten, Silikonaten, Wachsen und Fetten wasserabstoßend zu gestalten. Mit diesen Substanzen findet vor allem eine Oberflächenbelegung, die unter dem Namen "coating" geläufig ist, statt. Die so behandelten Kernmaterialien sind zwar für flüssiges Wasser abstoßend, Absorbieren aber Wasserdampf, in Form von Luftfeuchtigkeit, und führen damit zu einer Verschlechterung der Dämmeigenschaften. Aus der DE 4221716 A1 zum Beispiel ist es bekannt, pyrogene Kieselsäuren mit Organosilanen umzusetzen und damit hydrophob, d.h. Wasser abweisend zu machen. Derartige hydrophobe Kieselsäuren lassen sich aber nicht ausreichend verdichten und sind nicht verpressbar, da eine Verzahnung der Kieselsäureteilchen der Silanolgruppen durch die Absättigung mit organischen Gruppen nicht mehr gegeben ist. Ebenfalls ist eine Verpressung einer mit hydrophober Kieselsäure versehenen Mischung nicht möglich. Eine Verpressung ist aber für die Verfestigung und damit für die Verankerung in den Hohlräumen der Hohlbausteine unbedingt notwendig.

Eine chemische Nachbehandlung des Dämmstoffes mit Organosilanen nach der Verpressung in den Hohlräumen ist sehr aufwändig, da eine Durchdringung des Kernmaterials nur sehr langsam mit hohem Druck (Autoklaven) erfolgen kann. Außerdem wird bei diesem Verfahren die Struktur des Kernmaterials zum Teil zerstört.

Zum Einsatz kommen Verbindungen der Formeln Rₙ-Si-X₄₋ₙ
wobei
n = 1, 2 oder 3 sein kann
oder
R₃Si-Y-SiR₃ wobei Y NH oder O sein kann
- R =: -CH₃ und/oder H -C₂H₅
- X =: Cl oder Br
-OCH₃
-OC₂H₅
-OC₃H₅
Derartige Verbindungen sind z.B.
(CH₃)₃SiCl [Trimethylchlorsilan]; (
CH₃)₂SiCl₂ [Dimethyldichlorsilan];
CH₃SiCl₃ [Monomethyltrichlorsilan] oder
(CH₃)₃SiOC₂H₅ [Trimethylethoxisilan] ;
(CH₃)₂Si(OC₂H₅₎₂ [Dimethyldiethoxisilan] ;
CH₃Si(OC₂H₅)₃ [Methyltriethoxisilan] sowie
(CH₃)₃SiNHSi(CH₃)₃ [Hexamethyldisilazan];
(CH₃)₃SiOSi(CH₃)₃ [Hexamethyldisiloxan] .

Bevorzugt werden erfindungsgemäß Trimethylethoxisilan, Dimethyldiethoxisilan, Methyltriethoxisilan, Hexamethyldisilazan

Die Zusatzmengen der Silane hängt von der spezifischen Oberfläche (BET-Oberfläche) der Kieselsäuren, deren Anteil an der Mischung, sowie der Art der Silane ab. Die Zugabemenge liegt zwischen 0,5 - 10 Gew.%, vorzugsweise zwischen 1 und 6 Gew.%. Die Zugabe der Silane erfolgt während der Mischungsherstellung in flüssiger Form, dabei ist es notwendig, dass eine innige Durchmischung der einzelnen Komponenten stattfindet.

Die Herstellung der mikroporösen Dämmstoffmischung kann generell in diversen Mischaggregaten stattfinden. Bevorzugt kommen jedoch Planetenmischer zur Anwendung. Hierbei ist es vorteilhaft, die Fasern zuerst mit einem Teil der zweiten Mischkomponenten als eine Art Masterbatch vorzumischen, um damit ein vollständiges Aufschließen der Fasern zu gewährleisten. Nach dem Faseraufschluss erfolgt die Zugabe des größten Teils der Mischkomponenten. Als letztes in der Mischabfolge geschieht die Zugabe der flüssigen Silane.

Nach Beendigung des Mischprozesses kann das Schüttgewicht der Mischung je nach Art und Menge der Komponenten zwischen 40 - 180 g/l, vorzugsweise 40 - 90 g/l, betragen. Die Rieselfähigkeit der resultierenden mikroporösen Mischung ist sehr gut, so dass sie problemlos und homogen zu Platten verpresst u. a. auch z. B. in die Hohlräume von Hohlbausteinen eingefüllt und verpresst werden kann.

Beim Verpressen zu Platten, kann durch Festlegung auf bestimmte Plattenstärken, über das Gewicht, die Dichte und infolge dessen auch die Wärmeleitzahl des Dämmstoffes wesentlich beeinflusst werden. Je geringer die Dichte der Platten ist, um so geringer ist die Wärmeleitzahl, und um so besser die Wärmedämmeigenschaften. Realistisch sind Dichten im Bereich von 80 - 300 kg/m³, vorzugsweise 100 - 200 kg/m³.

Die auf die beschriebene Art hergestellten mikroporösen, hydrophoben Wärmedämmstoffe kommen erfindungsgemäß zum Einsatz:
- als Dämmung in Bauhohlsteinen
- als Kerndämmung bei mehrschaligen Bausteinen
- als Kerndämmung für Vakuumisolationsplatten (VIP)
- als Kerndämmung für Wärmedämmstoffverbundsysteme (WDVS)
- als Dämmung bei zweischaligen Mauerwerken

Ein Einsatz der in der Erfindung oben beschriebenen hydrophoben, mikroporösen Wärmedämmstoffe findet erfindungsgemäß in Bauhohlsteinen statt.

Hohlbausteine sind Bauelemente, die einen oder mehrere Hohlräume aufweisen. Sie können aus anorganischen, keramischen Materialien, wie gebranntem Tongut (Ziegel), Beton, Glas, Gips sowie Naturprodukten wie Naturstein, z.B. Kalksandstein bestehen. Vorzugsweise kommen Hohlbausteine aus Ziegel, Beton und Leichtbeton zur Anwendung.

Ausführungsformen sind Wandbausteine, Bodenplatten, Deckenelemente und Vorbauelemente.

Es ist bekannt, dass die Hohlräume dieser Bauelemente mit porösem hohlraumstrukturierten Dämmmaterialien wie Styroporschaum oder Perlite-Schaum gefüllt sein können (DE 3037409 A1 und DE-OS 2825508). Diese Bauelemente werden als Hohlbausteine mit integrierter Wärmedämmung bezeichnet.

Hohlbausteine mit integrierter Wärmedämmung, haben den Vorteil, dass der Ziegelhauscharakter bei der Bauausführung erhalten bleibt.

Die Verwendung dieser Hohlbausteine mit integrierter Wärmedämmung soll im Mauerwerk eine besonders hohe Wärmedämmung und eine günstige Wasserdampfdurchlässigkeit sowie kaum Wasseraufnahme gewährleisten, zudem soll die Wärmespeicherung begünstigt werden.

Die Dämmmaterialien in diesen Hohlblocksteinen mit integrierter Wärmedämmung können sowohl organischen wie anorganischen Ursprungs sein.

An organischen Materialien werden als Isoliermaterial geschäumte Polystyrolteilchen bevorzugt eingesetzt. Dabei sind die aufgeschäumten Kunststoffpartikel oberflächlich, unter Freilassung von gasdurchlässigen Zwischenräumen, miteinander verbunden und verankert.

Die Herstellung erfolgt durch Füllung der Hohlräume mit einer Schüttung von Styrolgranulat und anschließender Aufschäumung mit heißen Gasen, vornehmlich Wasserdampf. Derartige Isolierbausteine zeichnen sich durch eine verbesserte Wärmedämmfähigkeit aus. Von Nachteil ist, die Brennbarkeit der organischen Bestandteile dieser Bauelemente. Ebenso lässt die Wärmedämmfähigkeit durch die Aufnahme von Wasser/Feuchtigkeit mit der Zeit stark nach.

Als anorganische Materialien für Hohlbausteine mit integrierter Wärmedämmung, kommen geschäumte Perlite und Vermiculite zum Einsatz. Bevorzugt werden geschäumte Perlite eingesetzt, die mit Bindemitteln wie wässrigen Dispersionen auf Basis von Vinylacetat- und Acrylvinylacetat-Copolymeren abgebunden und verfestigt werden. Diese Füllungen weisen mit den notwendigen Bindungsmitteln einen hohen Anteil an brennbaren Komponenten auf, auch ist die resultierende Wärmedämmung nicht optimal.

Eine Abbindung und Verfestigung der Perlite kann ebenfalls mit Alkaliwassergläsern als Bindemittel erfolgen. Dieses Verfahren führt zu Kernmaterialien, die stark alkalisch, Wasser anziehend sind und zu Ausblühungen führen. Hinzu kommt, dass die schon von vornherein ungenügenden Wärmedämmeigenschaften noch weiter herabgesetzt werden. Die Verwendung von Kieselsol als Bindemittel führt zu einem schlecht verfestigten Dämmmaterial mit hoher Wasseraufnahme und schlechten Wärmeisoliereigenschaften.

Durch den erfindungsgemäßen Einsatz der beschriebenen hydrophoben mikroporösen Wärmedämmstoffe in Hohlbausteinen, werden die Wärmedämmeigenschaften dieser Steine wesentlich verbessert und nachhaltig auf hohem Niveau gehalten.

Erfindungsgemäß können die entsprechenden Wärmedämmstoffe zu maßgenauen Platten verpresst und in die Kammern der Bauhohlsteine integriert werden, es kann aber auch die mit Organosilanen versetzte Mischung in die Kammern der Bausteine eingefüllt und mittels Presshilfen direkt in den Kammern verpresst werden. Alternativ können maßgenaue Platten aus zuvor hergestellten Großplatten herausgeschnitten und in die Bausteine integriert werden.

Ebenfalls möglich ist eine Fixierung der Platten in den Hohlräume mittels PUR-Schaum oder anderer Haftschäume, bzw. Kleber.

Desgleichen kann eine Umhüllung mit Vliesmaterialien, um z. B. eine mechanische Beeinflussungen und somit auch ein Ausstauben der Wärmedämmung zu verhindern, vorgenommen werden.

Um hierbei die Wirksamkeit der erreichbaren Wärmdämmungen im Verhältnis zur Wirtschaftlichkeit optimal zu nutzen, sind er-findungsgemäß effektive Kombinationen zwischen hocheffizienter hydrophober mikroporöser Wärmedämmung mit herkömmlichen Wärmedämmungssystemen mit geringeren Wärmedämmwirkungen möglich. Desgleichen können, je nach Einsatz und Dämmvermögen, einzelne oder mehrere Hohlkammern auch ohne Wärmedämmmaterialien versehen sein.

Die Erfindung wird nun anhand von in der Zeichnung dargestellten Ausführungs- und Anwendungsbeispielen näher erläutert. Es zeigen
Fig. 1 bis 8 schematische Aufsichten mit Detailerläuterungen erfindungsgemäßer Bausteine,

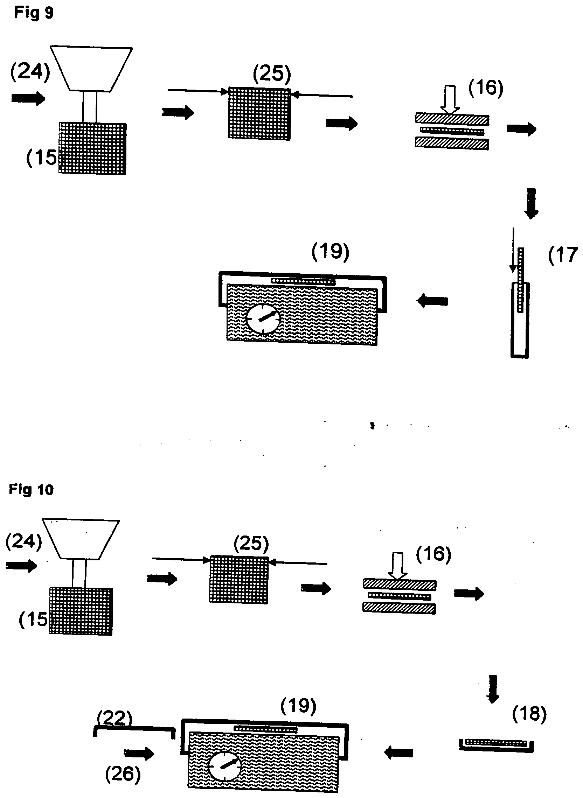

Fig. 9 und 10 schematisch die Vorgehensweise bei der Herstellung erfindungsgemäßer Wärmedämmplatten,
Fig. 11 ein Beispiel einer eingeschlossenen Wärmedämmplatte,
Fig. 12 bis 16 in Aufsicht weitere Ausführungsformen von mit die erfindungsgemäße Wärmedämmung versehenen Bausteinen,

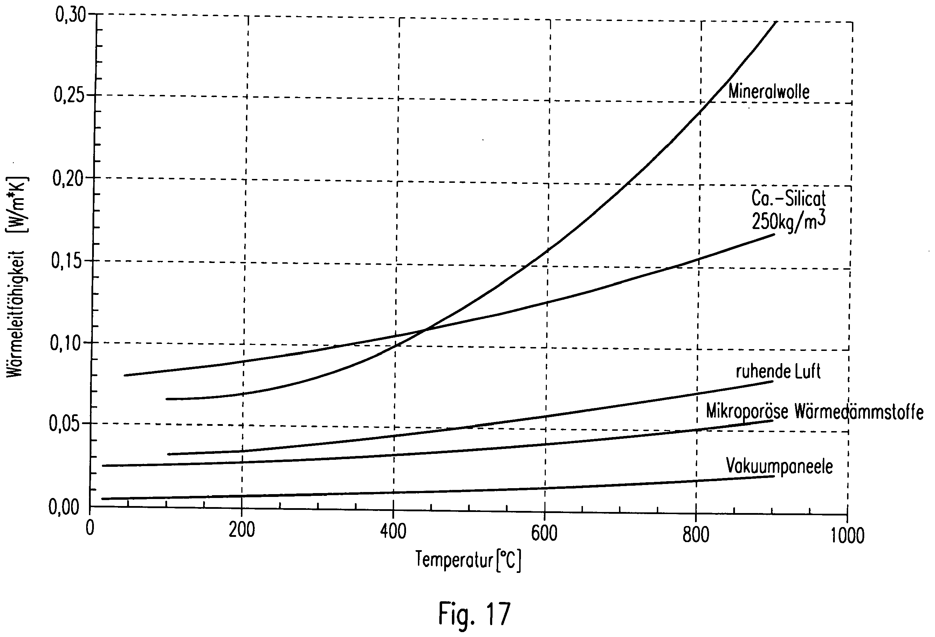

Fig. 17 eine Darstellung der Wärmeleitfähigkeit verschiedener Wärmedämmmaterialen in Abhängigkeit von der Temperatur,
Fig. 18 ein schematisches Vliesschema zur Herstellung erfindungsgemäßer Bausteine,
Fig. 19 schematisch ein Ausführungsbeispiel einer Anlage zur Herstellung erfindungsgemäßer Bausteine.

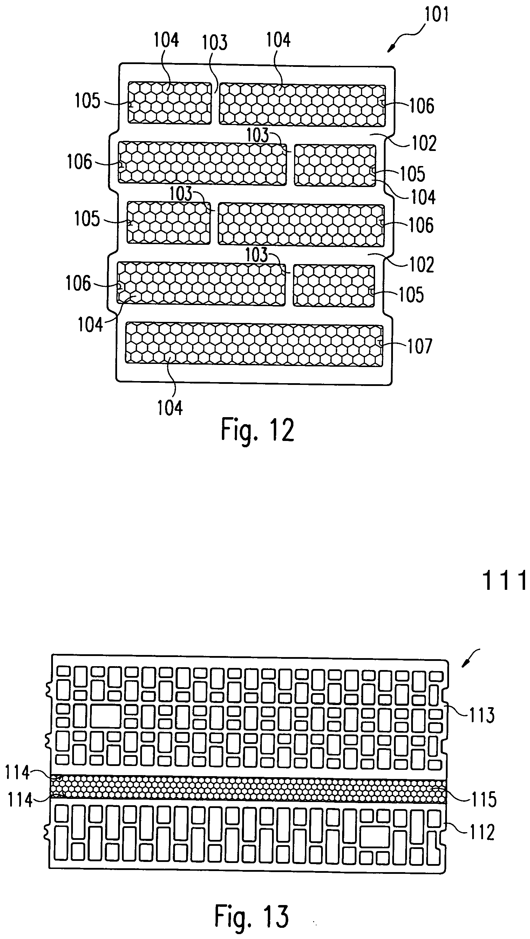

Zum Beispiel zeigt Fig. 12 in Aufsicht einen Baustein 101, beispielsweise aus gebranntem Ziegelmaterial, mit im verbauten Zustand vertikalen Löchern gemäß einem vorgegebenem Lochbild. Die einzelnen Löcher 104, 105 bzw. 106 sind durch Stege voneinander getrennt, von denen im verbauten Zustand breitere Stege 102 in Wandrichtung verlaufen und jedenfalls bei einigen Lochreihen schmalere Stege 103 im verbauten Zustand in Richtung von Innen nach Außen verlaufen, wobei die schmaleren Stege 103 in den verschiedenen Lochreihen gegeneinander versetzt sind. Die schmaleren Stege 103 sind in den Bereichen des Bausteins 101 vorgesehen, die im verbauten Zustand tragende Funktion ausüben sollen. In Bereichen, bei denen im verbauten Zustand tragende Funktion nicht erforderlich ist, sondern lediglich wärmedämmende Funktion, können die schmalen Stege 103 entbehrlich sein, wie das in einer der Lochreihen durch das Loch 106 dargestellt ist. Mindestens eines der Löcher, im Ausführungsbeispiel alle Löcher 105, 106, 107 des Bausteins 101, sind mit einem Wärmedämmmaterial 104 gefüllt. Wie dargestellt weist der Baustein 101 an sich bekannte im verbauten Zustand vertikal verlaufende Rippen und Vertiefungen auf, die ein vereinfachtes Verbauen ermöglichen, wie das an sich bekannt ist und daher nicht näher erläutert wird.

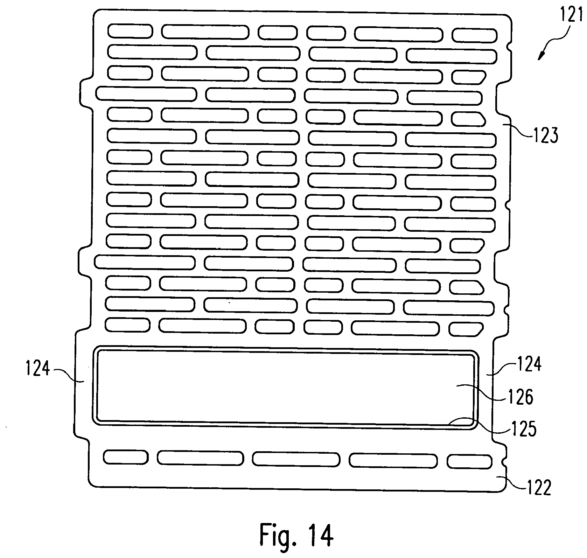

Fig. 14 zeigt zum Beispiel einen Baustein 121, in dem die beiden Ziegelteile 122 bzw. 123 durch keramische durchgehende Stege 124 fest miteinander verbunden sind, woher der so gebildete Hohlraum 126, mit dem erfindungsgemäß hergestelltem Wärmedämmstoff 125 gefüllt ist.

Fig. 13 zeigt einen anderen Baustein, nämlich einen zweischaligen Baustein 111 mit einer Außenschale 112 und einer Innenschale 113, die durch einen durchgehenden Spalt 114 voneinander getrennt sind. Wie dargestellt weisen Innenschale 113 und Außenschale 112, jeweils Lochbilder auf, das heißt im verbauten Zustand vertikal verlaufende Löcher, hiermit deutlich andere Abmessungen als in Fig. 12, die durch in Wandrichtung und quer zur Wandrichtung verlaufende Stege voneinander getrennt sind. Bei dem zweischaligen Baustein 111 ist der Spalt 114 mit einem Wärmedämmmaterial 115 ausgefüllt, wobei zweckmäßig randseitig oder in anderer Weise Innenschale und Außenschale 112, 113, im Bereich des Spaltes 114 fest miteinander verbunden sind und die Verbindung, nicht dargestellt, möglichst geringe Wärmeleitfähigkeit besitzt. Es handelt sich dabei um eine nichtkeramische Verbindung, beispielsweise eine durch Klammern gebildete Verbindung, wie das grundsätzlich bekannt ist. Ferner kann die Wärmedämmung 115 eigensteif ausgebildet sein und mit den den Spalt 114 definierenden Flächen der beiden Schalen 112, 113 fest verbunden ist.

Hier findet ein Einsatz der in der Erfindung beschriebenen hydrophoben, mikroporösen Wärmedämmstoffe erfindungsgemäß in mehrschaligen Bausteinen statt.

Es ist an sich bekannt, dass die Hohlräume von Hohlbausteinen mit porösem hohlraumstrukturiertem Dämmmaterialien gefüllt sein können z.B. DE 3037409 A1 und DE-OS 2825508. Diese Bauelemente werden als Hohlbausteine mit integrierter Wärmedämmung bezeichnet und weisen gegenüber den herkömmlichen Hohlbausteinen ohne Füllung bessere Wärmedämmeigenschaften auf.

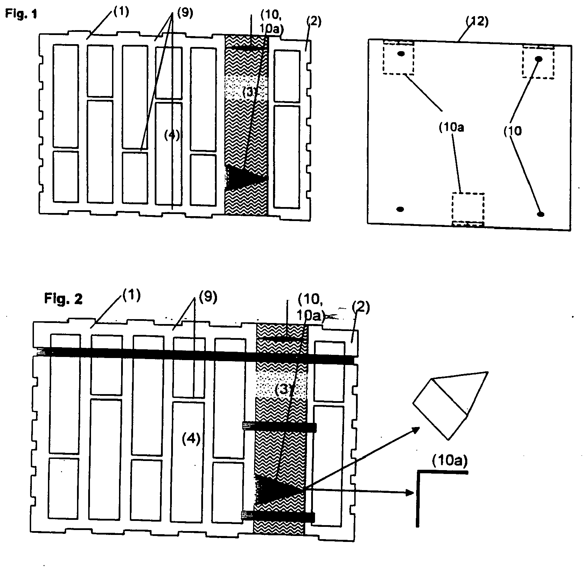

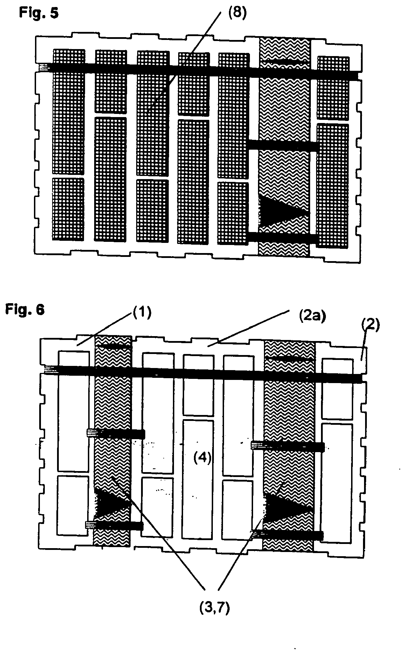

Bedingt durch die Konstruktion der Hohlbausteine können die Dämmmaterialien nur in einzelne Hohlkammern (z.B. in Fig. 5 und 6) des Steins eingebaut werden. Dies führt zu besseren Dämmeigenschaften. Wegen der durchlaufenden Scherbenkonstruktion mit hoher Wärmeleitfähigkeit, entstehen aber Wärmebrücken (9 in Fig. 2), welche die guten Dämmeigenschaften des Kernmaterials im Gesamtsystem zum größten Teil wieder aufheben.

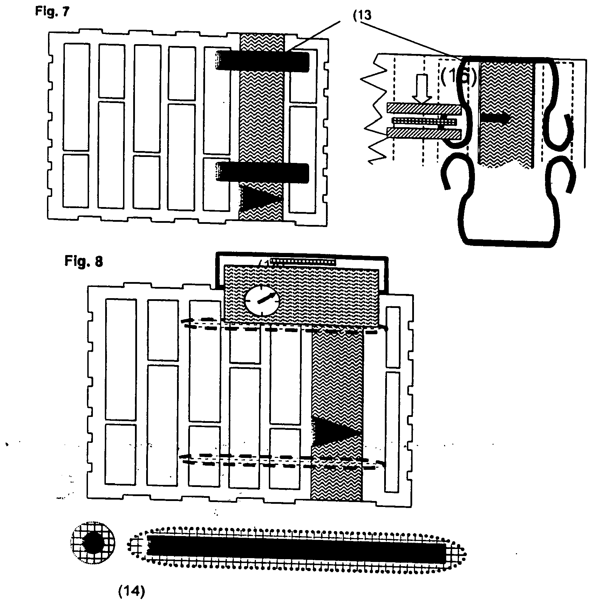

Optimal wäre also ein Baustein aus zwei oder mehr Schalen mit einer Wärmedämmschicht zwischen den einzelnen Bausteinschalen, die möglichst den gesamten Querschnitt des Bausteins von innen nach außen also in Richtung des Energieabflusses abdeckt (z.B.3; 7 in Fig. 6). Dies scheitert bisher daran, dass Wärmedämmstoffe in sich keine genügend hohe mechanische Stabilität aufweisen um als Verbindungselement zwischen den einzelnen Schalen einen genügend festen, handhabbaren Gesamtbaustein zu gestalten. Behelfsmäßig können metallische Anker oder Klammern 13 (Fig. 7) eingesetzt werden, welche die einzelnen Schalen, an der Dämmung vorbei, verbinden. Diese Anker oder Klammern erweisen sich als Wärmebrücken, die die Wirkung der Wärmedämmung sehr nachteilig beeinflussen.

Es wurde nun gefunden, dass dieser Nachteil durch erfindungsgemäße Verbindungselemente, die nur eine sehr geringe Wärmeleitfähigkeit bzw. eine Wärmeleitfähigkeit gegen Null aufweisen und damit die Isoliereigenschaften des Wärmedämmstoffes ohne wesentliche Einschränkung zur Geltung bringen, möglich ist.

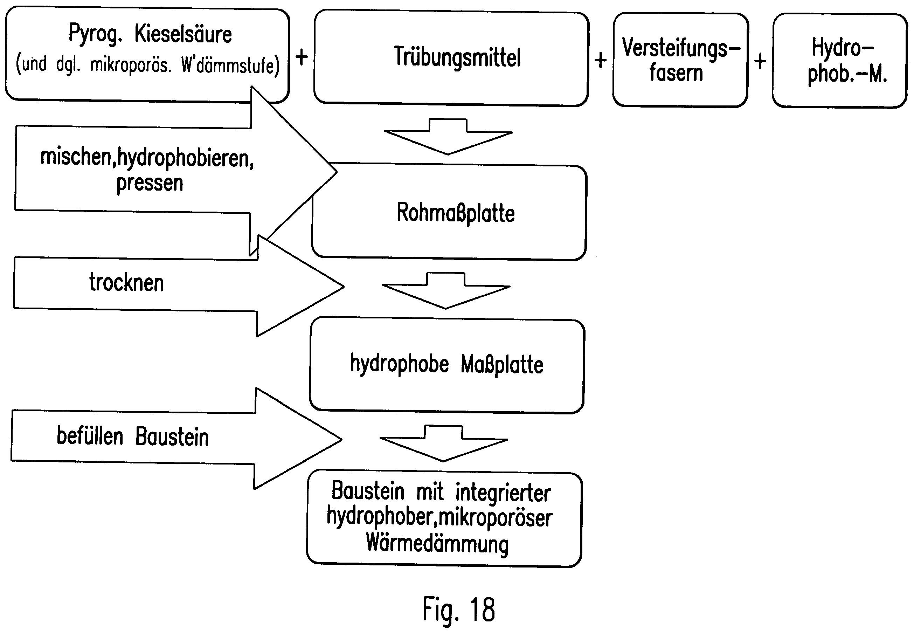

Fig. 18 zeigt die einzelnen wesentlichen Verfahrensschritte, nämlich die Herstellung der Mischung aus dem mikroporösen Wärmedämmmaterial, insbesondere pyrogener (hydrophiler) Kieselsäure und aus einem Hydrophobierungsmittel unter gegebenenfalls Zugabe von Versteifungsfasern und einem Trübungsmittel, wobei die Mischung zur Herstellung einer Rohmaßplatte gepresst wird unter gleichzeitiger Hydrophobierung. Diese Rohmaßplatte wird dann getrocknet, um die hydrophobe weiterverarbeitbare gepresste Platte zu erhalten. Dann kann, wie erwähnt, die hydrophobe Maßplatte in den Baustein eingeführt werden.

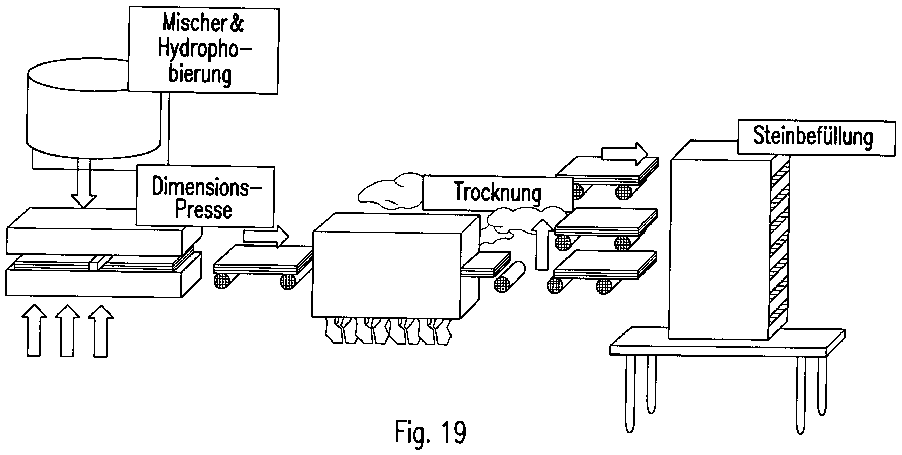

Dies ist in Fig. 19 nochmals in anderer Darstellungsweise gezeigt.

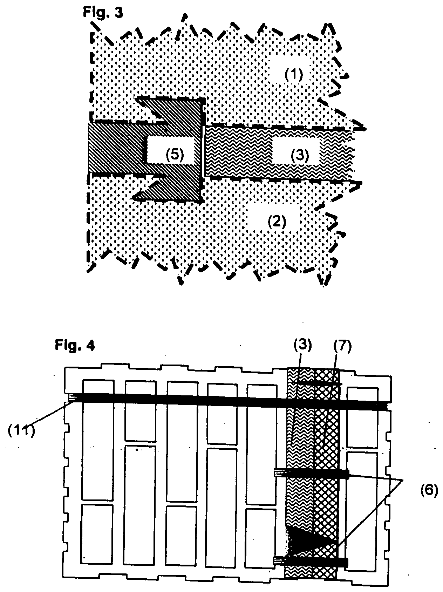

Es wurden erfindungsgemäße Elemente 5 (Fig. 3) gefunden, die die Einzelschalen des Bausteins kraftschlüssig verbinden. Sie weisen hierbei, neben einem geringen Querschnitt, vor allem eine niedrigere Wärmeleitfähigkeit auf, reduzieren dadurch den Energieabfluss und weisen gleichzeitig eine genügend stabile Verankerung auf. Erfindungsgemäß werden diese Erfordernisse durch Gratnuten in den Bausteinschalen und Gratleisten an den Verbindungselementen 5 erreicht. Hierbei sind die verschiedensten Profile wie z.B. Schwalbenschwanz-, T-,L-, Kugelprofil möglich.

Das Leistenmaterial besteht aus stabilen, mechanisch beanspruchbaren Materialien mit geringerer Wärmeleitzahl als der Ziegelscherben.

Die jeweilige Gratnut in den Bausteinen wird vorzugsweise schon bei der Herstellung des Ziegels mit integriert. Weiter wurde gefunden, dass durch Umgürtelung 6, 11 (Fig. 4) und Verzurrung oder feste Umschnürung mit flachen Bändern, Drähten oder Schnüren eine kraftschlüssige Verbindung der einzelnen Schalen ohne Unterbrechung oder Beeinträchtigung des Wärmedämmstoffes erreicht wird (6; 11) .

Die oben aufgeführte Technologie zur kraftschlüssigen Verbindung der einzelnen Bausteinschalen über die Kerndämmung, eignet sich erfindungsgemäß dazu, hydrophobe, mikroporöse Wärmedämmstoffplatten mit anderen herkömmlichen Wärmedämmstoffen zu kombinieren.

Die im mehrschaligen Baustein eingesetzten Wärmedämmstoffsysteme werden sowohl einzeln (3) als auch im Verbund (7) mit anderen Wärmedämmstoffen eingesetzt. Hierzu gehören beispielsweise:
anorganische Faserplatten, Perliteplatten, Vermiculitplatten, Silikatschaumplatten, wobei auch hier sowohl Kombinationen untereinander als auch zur Dämmung zwischen den Schalen möglich sind.

Die Herstellung eines mehrschaligen Hohlbausteines mit integrierter Wärmedämmung zwischen den Schalen erfolgt erfindungsgemäß in der Art, dass die jeweiligen Dämmmaterialen an eine Schale des Bausteins angesetzt werden und eine Gegenschale des Bausteins bis auf die gewünschte Gesamtabmessung angepresst wird. Hierbei können erfindungsgemäß Abstandhalter (10; 10a) dazu dienen, die Endmaße des Bausteinsystems exakt einzuhalten und ein Lockern oder Verrutschen der Wärmedämmung zwischen den Schalen zu vermeiden. Bei einer VIP-Dämmung kann hier zusätzlich noch mit Klebern eine Verbindung fixiert werden.

Das System kann nun erstens durch einpressen von Gratleisten in die Gratnuten am Baustein verkeilt und stabilisiert werden (5), wobei die Profilleisten gegebenenfalls in den Nuten verklebt werden können. Zum anderen können erfindungsgemäß durch Umgürtelung und Verzurrung mit Umreifungsmaterialien, die Einzelschalen mitsamt dem Wärmedämmkern, mit Spann- und Verschlussgeräten zu einem Gesamtsystem zusammengezurrt und kraftschlüssig stabilisiert werden (6; 11). Als Abstandshalter sowie als zusätzliche Halterung für den Wärmedämmstoff, können zylinderförmige Abstandshalter, die den Dämmstoff durchdringen, aus Keramik oder Kunststoff(10), vorzugsweise mit spitzen oder kugelförmigen Enden zur Vermeidung von Wärmebrücken eingesetzt werden oder auch flache deltaförmige, rechtwinklige Plättchen aus den oben erwähnten Materialien, die an der Dämmung vorbeigeführt werden(10a).

Das Umreifungsmaterial (6,11) zur kraftschlüssigen Verbindung der Bausteinschalen inklusive Dämmmaterial sind erfindungsgemäß z.B. Bänder, Drähte oder Schnüre aus Kunststoff oder Metall, vorzugsweise Kunststoffbänder aus PP oder PPT.

Die Laufwege der Verzurrungsmaterialien können wie folgt sein:
Außen um den Gesamtbaustein mit Dämmung (11 oder innen, durch die vorgegebenen Hohlräume der Bausteine (6), wobei je nach Hohlraumlage zum Dämmmaterial die geringste mögliche Bandlänge zu wählen ist. Bei mehr als zweischaligen Systemen (2; 2a) kann die Umreifung ebenfalls sowohl außen über das Gesamtbausteinsystem (11), als auch innen über die Hohlräume des Bausteins erfolgen (6) .

Je nach Stabilitätserfordernissen kann die Verzurrung beliebig häufig in verschiedenen Abständen erfolgen.

Zur Vermeidung von Überständen des Umreifungsmaterial ist es vorteilhaft, den Baustein an den vorgesehenen Umgürtelungsstellen mit einer flachen Führungsnut zu versehen.

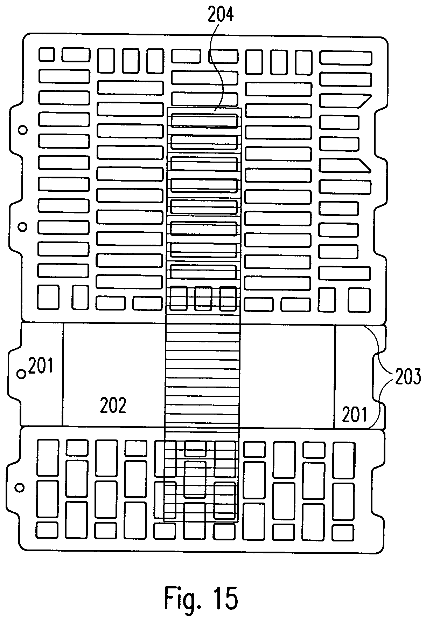

Ebenfalls ist zur kraftschlüssigen Verbindung der beiden Einzelschalen hochfestes Glasfaservlies, das über einen Teil der Steinlänge gelegt und verklebt oder vermörtelt (Fig.15-4) wird, möglich. Erforderlichenfalls erhält der Baustein eine eingefräste Nut zur Aufnahme der Gewebestreifen. An den Seiten erhält der Baustein Klammern zur Transport- und Verarbeitungssicherungsicherung (Fig.15-1), die nach dem Einbau des Bausteins entfernt werden.

Desgleichen kommt der in der Erfindung beschriebene hydrophobe, mikroporöse Wärmedämmstoff erfindungsgemäß in Vakuumisolationpanelen (VIP) zum Einsatz.

Beim Einsatz von Vakuumisolationsplatten(VIP) in Bausteinsystemen, ist das erfindungsgemäße Dämmstoffsystem ein Mauerwerk mit integriertem Kern aus einem Vakuumisolations-paneel auf Basis des oben beschriebenen mikroporösen Kernma-terials und einer Metall- oder Kunststoffumhüllung, welche möglichst wärmebrückenfrei hergestellt wird.

Als Kerndämmmaterialien werden die bereits beschriebenen, erfindungsgemäßen hydrophoben, mikroporösen Wärmedämmstoffe eingesetzt.

Hierbei wird durch Evakuierung der noch in den nanoskaligen Hohlräumen vorhandenen Restgase auf moderate Unterdrücke < 100 mbar (vorzugsweise 0.01-10 mbar), die Wärmeleitfähigkeit durch Unterdrückung der Konvektion noch einmal auf Werte von 2-10 mW/mK (vorzugsweise 3-5 mW/mK) reduziert.

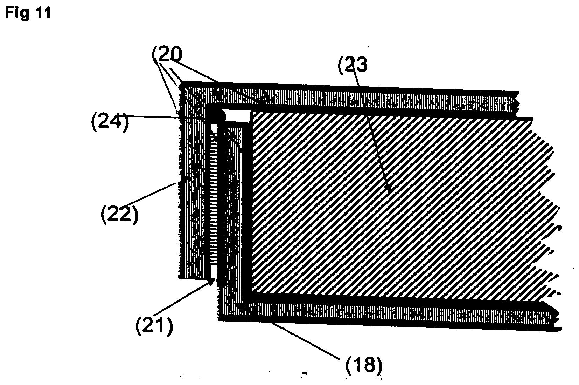

Die vorher eingevliesten mikroporösen Dämmplatten werden in eine vakuumdichte Umhüllung gebracht (17). Diese vakuumdichte Umhüllungen können so genannte Aluminiumverbundfolien, metallisierte Folien sein oder vorzugsweise eine metallische Umhüllung auf Basis Edelstahl oder Weißblech bzw. Kunststoffen vorzugsweise Polypropylen (PP) (Fig. 11). Die metallischen Umhüllungen weisen, eine coextrudierte Beschichtung auf Basis eines Polyolefinterpolymers mit einer hervorragenden Haftung zum Metall und guten Barriereeigenschaften gegenüber Luft und Wasserdampf auf (20).

Nach Einbringung des mikroporösen Dämmkerns in die Folienbeutel (17) werden die Dämmplatten in eine Vakuumkammer eingebracht und auf den vorgesehenen Enddruck (<100 mbar, vor-zugsweise 0.01 - 10 mbar) evakuiert.

Die in Folienbeutel eingebrachten hydrophoben, mikroporösen Wärmedämmstoffplatten werden in der Vakuumkammer verschweißt (19).

Bei der metallischen Umhüllung wird, nach Einbringung des mikroporösen Dämmkerns in die untere Metallschale (18)und Evakuierung auf Drücke <100 mbar, vorzugsweise 0.01-10 mbar, in der Vakuumkammer ein Deckel (22)(26) passgenau auf die untere Schale (18) aufgepresst. Beide Metallteile (untere Schale und Deckel) sind mit einer coextrudierten Polyolefinschicht beschichtet (20) (Dicke zwischen 0,05-0,5 mm, vorzugsweise 0,2-0,4 mm um Wärmebrücken durch direkten Metallkontakt zu vermeiden).

Als Thermoplast (21) wird vorzugsweise ein Polypropylen/ Polyethylen-Acrylat Terpolymer eingesetzt, welcher hervorragende Adhesion zum Metall und gute Barriereeigenschaften aufweist.

Die so hergestellten Vakuumisolationspaneele haben somit eine diffusiondichte Umhüllung, sind gegen Verletzung unempfindlich und sind somit prädestiniert für den Einsatz im Baubereich (Fig. 11).

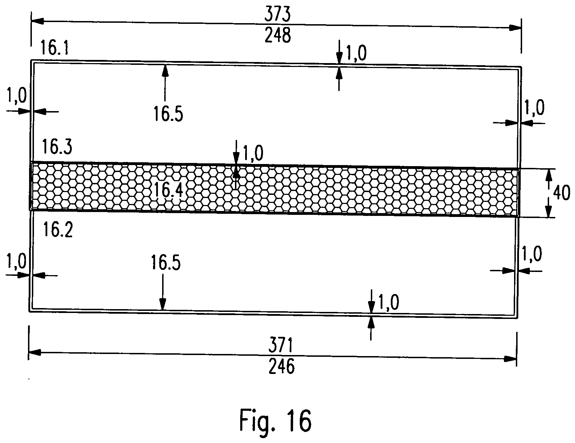

Zur Vermeidung von Wärmbrücken durch die metallische Umhüllung, speziell bei kleinen Dimensionen, wird die Verwendung von mechanisch stabilen Umhüllungen auf Basis PP bzw. PP/PVDC Verbundsystemen (Fig.16) in welche auf die gesamte Ober-/Unterfläche eine gasundurchlässige Aluminiumverbundfolie (Fig.16-5) einlaminiert wird und nur die äußere Umrandung (Fig.16-1&2) aus reinem PP/PVDC besteht. Das verwendete Kern-material (Fig.16-3) besteht aus einer hydrophoben Kieselsäure, deren Wasseraufnahme < 0,1% beträgt. Aufgrund der sehr geringen Wasserdampfdiffusion nur durch den umlaufenden Rand aus PP und oder PP/PVDC und der nicht vorhandenen Wasseraufnahme der erfindungsgemäßen hydrophoben Kieselsäure wird ein Gleichgewichtszustand (Wasserdampfpartialdruck Umgebung und Kern-material) erst nach mehreren Jahren erreicht. Sobald der Gleichgewichtszustand Umgebung/Kernmaterial erreicht ist, kann kein Wasserdampf mehr in das System nachgeführt werden. Bei einem zu erwartenden Wasserdampfpartialdruck im Gleichgewichtszustand von 10-15 hPa wird die Wärmeleitfähigkeit des nanoskaligen Kernmaterials nicht beeinflusst. Es ist somit mit keinem Druckanstieg im Kernmaterial durch Wasserdampf zu rechnen und somit auch nicht mit einem Anstieg der Wärmeleitfähigkeit des Gesamtsystems durch Druckerhöhung bzw. Wasseraufnahme des Kernmaterials

Als ein weiterer Einsatzbereich der in der Erfindung beschriebenen hydrophoben, mikroporösen Wärmedämmstoffe sind erfindungsgemäß Wärmedämmstoffverbundsysteme im Baubereich.

Zur Stabilisierung der hydrophoben, mikroporösen Paneele werden dieselben mit Umhüllungen versehen, die aus einem Press-, Walz, Extrusions- Schaum- oder Faserwerkstoff bestehen, wobei der Kern sowohl unter Normaldruck als auch unter Unterdruck gehalten werden kann. Die Umhüllung kann für Normaldruckbedingungen ein- oder zweiflächig sein oder alle Flächen des Paneels umhüllen, kann aber auch mehrschichtig gestaltet werden und kann an den verschiedenen Paneelseiten aus gleichem oder aus unterschiedlichem Umhüllungsmaterial bestehen. Bei Unterdruckbedingungen umfasst naturgemäß die Umhüllung alle Flächen des Paneels. Sie wurden bereits unter dem Abschnitt Vakuumisolationsplatten (VIP) beschrieben, sie sind aber ebenfalls im Wärmedämmstoffverbundsystem einsetzbar.

Die verstärkende Umhüllung kann bestehen aus:
Karton, Holz, Gipskarton, Schrumpffolien die nach dem Schrumpfprozess perforiert werden, diversen Kunststoffen, Vliesgeweben, Glasfaser verstärkten Kunststoffen (GFK) vor-zugsweise auf Basis von Polyesterharz, Epoxidharz oder Polyamid.

Zur kraftschlüssigen Verbindung der Umhüllungen, vornehmlich bei Verbünden von mehreren Schichten, werden Kleber eingesetzt. Diese sind vorzugsweise ausgewählt aus anorganischen Komponenten, wie Wassergläsern, Kieselsolen und Phosphaten, sowie aus organischen Verbindungen wie Reaktionsharzen, Kunststoffdispersionen oder Thermoplasten.

Die Anwendungsgebiete der erfindungsgemäßen Wärmedämmstoffverbundsysteme sind im Baubereich vielfältiger Art, vornehmlich bei:
Fassadendämmung, Dachdämmung, Wandbausteine, Bodenplatten, Deckenelemente, Spezialdämmungen wie z. B. hinter Heiz- und Wärmeaggregaten, Rollädenkästen.

Höchst effektiv ist ein Einsatz der in der Erfindung beschriebenen hydrophoben, mikroporösen Wärmedämmstoffe erfindungsgemäß in zweischaligen Mauerwerken.

Bei einem zweischaligem Mauerwerk handelt es sich um ein Mauerwerk mit zwei Mauerschalen mit einem Zwischenraum. Damit die einzelnen Schalen standfester sind, werden sie in regelmäßigen Abständen durch Mauerwerksanker oder Verbundziegel miteinander verbunden. Der Zwischenraum zwischen beiden Mauerwänden sollte so schmal wie möglich gehalten sein und 15cm nicht überschreiten.

Erfindungsgemäß werden zur Wärmdämmung die erfindungsgemäß beschriebenen Platten mit mikroporösem, hydrophoben Wärmedämmkern zwischen den beiden Mauerschalen eingefügt. Hierbei können die Paneele sowohl ohne Umhüllung, als auch mit Umhüllungen wie Wärmedämmstoffverbundsysteme (WDVS) oder als Vakuumisolationspaneele (VIP) eingesetzt werden, vorzugsweise aber mit einer Vliesumhüllung. Der Zwischenraum zwischen den beiden Mauerschalen kann an die jeweilige Stärke des Dämmmaterials angepasst werden, kann aber auch zusätzlich mit einem Luftspalt vor der Dämmung als Hinterlüftung versehen sein.

Statt einer Platte in der gewollten Dämmstärke, können auch mehrere Paneele mit entsprechend reduzierter Dämmstärke gegeneinander versetzt eingebaut werden. Hierdurch werden eventuelle Wärmebrücken vermieden. Möglich sind auch Kombinationen mit anderen Wärmedämmstoffen. Bei Maßgenauigkeit von Mauerspalt und Paneele kann auf eine Verankerung derselben verzichtet werden, andernfalls reicht eine punktuelle Ausschäumung mit PUR-Schaum zur Fixierung der Wärmdämmung. Um Wärmebrücken zu vermeiden, kann gegebenenfalls auf den Einsatz von metallischen Mauerankern verzichtet werden. Dies ist möglich, wenn Verbundziegel zur Stabilisierung des Systems eingebaut werden. Diese Verbundziegel können aus Hohlbausteinen mit integrierter Wärmedämmung bestehen, insbesondere aber aus Hohlbausteinen mit integrierter, hydrophober, mikroporöser Wärmdämmung.

Die Flächengröße der eingesetzten Wärmedämmpaneele richtet sich nach der verwendeten Ziegelgröße und der Anzahl der Bausteine pro vorher fest zu legender Fläche. Idealerweise kann die Paneelflächengröße so gewählt werden, dass immer nach einer bestimmten Mauerhöhe (3 oder 4 Ziegel), eine Reihe Verbundziegel, mit integriertem Wärmedämmstoffkern zur Vermeidung größerer Wärmebrücken, vermauert werden kann. Idealerweise könnten pro Fläche von 4 x 3 Ziegeln (Größe pro Ziegel ca. 25 x 25 cm) eine Wärmedämmplatte von ca. 100 x 75 cm Flächengröße eingesetzt werden.

Die Stärke des Gesamtsystems - zweischalige Mauer einschließlich Wärmedämmung - kann so gewählt werden, dass eine Verbundziegelstärke gleich groß ist wie die Gesamtmauerstärke.

Beim Mauern des zweischaligen Systems dürfen die erfindungsgemäßen Paneele mit Feuchtmörtel und Wasser in Kontakt kommen, ohne dass eine Wasseraufnahme im Dämmstoff stattfindet und damit eine Verschlechterung der Isolationswirkung eintritt. Die Paneele sind beim Einbau leicht handhabbar und können auf die notwendige Dimension und Konfiguration nachbearbeitet werden.

Das erfindungsgemäße zweischalige Wärmedämm-Verbund-Mauersystem ist atmungsaktiv und führt zu keinem Feuchtigkeitsstau, und daraus resultierender Schimmelbildung.

Mit dieser Technologie ist, wenn gewollt, bei gleichzeitigem hohen Lebenszyklus, eine schlanke Mauerkonstruktion mit Erhalt des "Ziegelhauscharakters" oder, wenn gewollt, bei größeren Dämmstärken, eine hocheffiziente Wärmedämmung hin zu Passiv- und Nullenergiehäusern, gegeben.

### Beispiele:

Im Folgenden sind ein Beispiel des erfindungsgemäßen separaten Kernmaterials (A) für Hohlbausteine und ein Vergleichsbeispiel herkömmlichen Kernmaterials (B) wiedergegeben.

Die Mischungen wurden in einem Zyklonmischer bei 3000 UpM durchgeführt.

Zur Messung der Wärmeleitzahl (□-Wert), wurde aus dem Mischgut, auf einer hydraulischen Presse, bei einem Druck von ca.

50 kg/cm² ein Formkörper mit den Dimensionen 250 x 250 x 25 mm gepresst.

### Mischung A:

**Rezeptur:**

| | |
|---|---|
| Pyrogene Kieselsäure (BET-Oberfläche 200m²/g) | 80 Gew.% |
| Glasfaser (Länge 6mm; Stärke 7µm) | 3 Gew.% |
| Rutil (Korngröße ca. 10µm) | 15 Gew.% |
| Trimethylethoxisilan (zusätzlich zu 100%) | 2 Gew.% |
| | |
| Gewicht der Gesamtmischung (ohne Silan): | 1000 g |

30 g Fasern, 75 g Rutil und 200 g Kieselsäure wurden zunächst 3 min lang, zum Aufschluss der Fasern vorgemischt. Anschließend wurde der Rest der Festkomponenten (625g Kieselsäure, 75g Rutil) zugegeben und weitere 2 min gemischt. In diese Mischung wurden dann 20 g Trimethylethoxisilan gegeben und eine weitere Minute gerührt.

Der fertigen Mischung wurden 312 g entnommen und zu einem Festkörper der Außenmaße 250 x 250 x 25 mm verpresst. Dieser Formkörper wurde anschließend 3 min lang auf 80°C erhitzt und anschließend 60 min bei 125°C ausgeheizt.

### Mischung B:

**Rezeptur:**

| | |
|---|---|
| Geschäumtes Perlit | 68 Gew% |
| Kali-Wasserglas | 32 Gew% |
| | |
| Gewicht der Gesamtmischung: | 1000 g |

Die Komponenten wurden 5 min lang im gleichen Mischaggregat wie (A) gemischt. 344 g der Mischung wurden zu einem Formkörper mit den gleichen Außenmaßen wie (A)verpresst und anschließend 20 min lang auf 150°C erhitzt.

### Mischung C:

**Rezeptur:**

| | |
|---|---|
| Pyrogene Kieselsäure (BET-Oberfläche 300m²/g) | 87 Gew.% |
| Zellwolle | 3 Gew.% |
| Ruß (Evonik, Flammruß 101) | 10 Gew.% |
| Hexamethyldisilazan (zusätzlich zu 100%) | 3 Gew % |
| Wasser (zusätzlich zu 100%) | 2 Gew.% |
| | |
| Gewicht der Gesamtmischung (ohne Silan und Wasser): | 1000 g |

30 g Fasern, 100 g Ruß und 200 g Kieselsäure wurden zunächst 3 min lang, zum Aufschluss der Fasern vorgemischt. Anschließend wurde der Rest der Festkomponenten (670g Kieselsäure) zugegeben und weitere 2 min gemischt. In diese Mischung wurden dann 30 g Hexamethyldisilazan gegeben und eine weitere Minute gerührt.

Der fertigen Mischung wurden 187,5 g entnommen und zu einem Festkörper der Außenmaße 250 x 250 x 25 mm verpresst. Dieser Formkörper wurde anschließend 3 min lang auf 80°C erhitzt und anschließend 60 min lang bei 125°C ausgeheizt.

### Ergebnisse:

| Mischung | Maße (mm) | Gewicht (g) | Rohdichte g/l | λ-Nert mW/mK |
|---|---|---|---|---|
| A | 250x250x25 | 312,0 | 200 | 18 |
| B | 250x250x25 | 344,0 | 220 | 24 |
| C | 250x250x25 | 187,5 | 120 | 16 |

## Patentansprüche

1. Bausteine und Bausysteme umfassend hydrophobe, mikroporöse Wärmedämmstoffe,
**dadurch gekennzeichnet,**
**dass** diese Wärmedämmstoffe mikroporöse Wärmedämmstoffe sind, die ohne Bindemittel mit Organosilanen versetzt werden und unmittelbar nach deren Zugabe zu Platten oder Formteilen verpresst oder verdichtet werden und die λ-Werte zwischen 0,014 und 0,022 W/mK liegen und die Dichte im Bereich von 80 bis 300 kg/m³ liegen und
die mikroporösen Wärmedämmstoffe pyrogene Kieselsäuren und Siliciumdioxid-Aerogele enthält.

2. Bausteine und Bausysteme umfassend hydrophobe, mikroporöse Wärmedämmstoffe nach Anspruch 1,
**dadurch gekennzeichnet,**
**dass** die mikroporösen Wärmedämmstoffe folgende Zusammensetzung haben:
pyrogene Kieselsäure/Siliciumdioxidaerogele 5-98 Gew.%;
Trübungsmittel 3-40 Gew.%;
Fasern 0-20 Gew.%.

3. Bausteine und Bausysteme umfassend hydrophobe, mikroporöse Wärmedämmstoffe nach Anspruch 1 oder 2,
**dadurch gekennzeichnet,**
**dass** die Organosilane die Formeln Rₙ-Si-X₄₋ₙ, wobei n = 1, 2 oder 3, oder R₃Si-Y-SiR₃ aufweisen wobei Y NH oder O ist und R = CH₃; -C₂H₅; und/oder H, X = Cl oder Br, -OCH₃; -OC₂H₅; -OC3H7 ist.

4. Bausteine und Bausysteme umfassend hydrophobe, mikroporöse Wärmedämmstoffe nach einem der Ansprüche 1 bis 3,
**dadurch gekennzeichnet,**
**dass** die hydrophoben, mikroporösen Wärmedämmstoffe Titanoxide, Zirkonoxide, Ilmenit, Eisentitanat, Eisenoxid, Zirkonsilikat, Siliciumcarbid, Manganoxid und Ruß, vorzugsweise Ruß und Siliciumcarbid als Trübungsmittel enthalten.

5. Bausteine und Bausysteme umfassend hydrophobe, mikroporöse Wärmedämmstoffe nach einem der Ansprüche 1 bis 4,
**dadurch gekennzeichnet,**
**dass** die hydrophoben, mikroporösen Wärmedämmstoffe synthetisch hergestellte Modifikationen von Siliciumdioxid, natürlich vorkommende SiO₂-haltige Verbindungen, thermisch aufgeblähte Mineralien und ferner feinteilige Metalloxide sind.

6. Verwendung der Bausteine und Bausysteme umfassend hydrophobe, mikroporöse Wärmedämmstoffe nach einem der Ansprüche 1 bis 5 als integrierte Wärmedämmung.

7. Bausteine und Bausysteme umfassend hydrophobe, mikroporöse Wärmedämmstoffe nach einem der Ansprüche 1 bis 5,
**dadurch gekennzeichnet,**
**dass** die Bausteine Hohlbausteine sind.

8. Bausteine und Bausysteme umfassend hydrophobe, mikroporöse Wärmedämmstoffe nach einem der Ansprüche 1 bis 5 und 7,
**dadurch gekennzeichnet,**
**dass** die Bausteine mehrschalige Bausteine sind.

9. Bausteine und Bausysteme umfassend hydrophobe, mikroporöse Wärmedämmstoffe nach einem der Ansprüche 1 bis 5 und 7 bis 8,
**dadurch gekennzeichnet,**
**dass** in die Bausysteme Vakuum-Isolations-Platten (VIP) integriert sind, deren Umhüllungsmaterial aus Metall oder aus Kunststoff besteht.

10. Bausteine und Bausysteme umfassend hydrophobe, mikroporöse Wärmedämmstoffe nach einem der Ansprüche 1 bis 5 und 7 bis 9,
**dadurch gekennzeichnet,**
**dass** die Bausysteme aus Wärmedämmstoffverbundsystemen bestehen.

11. Bausteine und Bausysteme umfassend hydrophobe, mikroporöse Wärmedämmstoffe nach einem der Ansprüche 1 bis 5 und 7 bis 10,
**dadurch gekennzeichnet,**
**dass** das Bausystem ein zweischaliges Mauerwerk ist.

12. Verwendung der Bausteine und Bausysteme umfassend hydrophobe, mikroporöse Wärmedämmstoffe nach Anspruch 8 in mehrschaligen Bausteinen mit integrierter Wärmedämmung, wobei die Verbindung der einzelnen Bausteine mit integrierter Wärmedämmung dadurch erfolgt, dass die Verbindungen eine geringere Wärmeleitfähigkeit als die Bausteine aufweisen oder über kraftschlüssige Verbindungen ohne Wärmebrückenbildung aufgebaut werden.

13. Bausteine und Bausysteme umfassend hydrophobe, mikroporöse Wärmedämmstoffe nach Anspruch 9,
**dadurch gekennzeichnet,**
**dass** bei zweischaligem Mauerwerk die Zwischenräume und bei Hohlbausteinen alle oder einzelne Hohlräume mit Vakuumisolationsplatten auf Basis mikroporöser Wärmedämmung aufgefüllt sind.

14. Verwendung der Bausteine und Bausysteme umfassend hydrophobe, mikroporöse Wärmedämmstoffe nach Anspruch 10 in Wärmedämmstoffverbundsystemen, deren Umhüllungen aus einem Press-, Walz-, Extrusions- Schaum- oder Faserwerkstoff oder aus Holz, Karton, Gipskarton, Schrumpffolien, diversen Kunststoffen, Vliesgeweben, Glasfaser verstärkten Kunststoffen bestehen.

15. Bausteine und Bausysteme umfassend hydrophobe, mikroporöse Wärmedämmstoffe nach Anspruch 11,
**dadurch gekennzeichnet,**
**dass** das Schalenmaterial ein oder beidseitig, aus Ziegelstein, Naturstein, Kalksandstein, Betonsteinen und -platten, Gasbetonstein, Holz, Klinker, Calciumsilkatplatten, Gipsplatten, besteht und dass zur Verstärkung der Konstruktion Mauerwerksanker und/oder Verbundsteine eingesetzt werden, wobei die Verbundsteine Hohlbausteine mit integrierter Wärmedämmung sein können.

16. Bausteine und Bausysteme umfassend hydrophobe, mikroporöse Wärmedämmstoffe nach einem der Ansprüche 1 bis 5 und 7 bis 11,
**dadurch gekennzeichnet,**
**dass** der Baustein (1; 21) ein Stein mit mehreren im verbauten Zustand vertikal verlaufenden (5, 6, 7; 25) Löchern gemäß einem vorgegebenen Lochbild ist, wobei zumindest eines der Löcher mit dem hydrophoben, mikroporösen Wärmedämmstoff gefüllt ist.

17. Bausteine und Bausysteme umfassend hydrophobe, mikroporöse Wärmedämmstoffe nach einem der Ansprüche 1 bis 5 und 7 bis 11,
**dadurch gekennzeichnet,**
**dass** die Bausteine zweischalige Bausteine (11) mit einer Außen- und einer Innenschale (12, 13) sind, die nichtkeramisch miteinander verbunden sind und durch einen mit dem hydrophoben, mikroporösen Wärmedämmstoff gefüllten Spalt voneinander beabstandet sind.

18. Bausteine und Bausysteme umfassend hydrophobe, mikroporöse Wärmedämmstoffe nach einem der Ansprüche 1 bis 5, 7 bis 11 und 13,
**dadurch gekennzeichnet,**
**dass** der Baustein zumindest an einer der Schalen, mehrere, im verbauten Zustand vertikal verlaufende Löcher gemäß einem vorgegebenen Lochbild aufweist und mindestens eines dieser Löcher mit dem hydrophoben, mikroporösen Wärmedämmstoff gefüllt ist.

19. Verfahren zum Herstellen eines Bausteins gemäß einem der Ansprüche 1 bis 5, 7 bis 11, 13 und 15 bis 18,
**dadurch gekennzeichnet, dass** es die Schritte
Herstellen eines einschaligen oder zweischaligen Bausteins mit im verbauten Zustand
vertikal verlaufenden Löchern gemäß einem vorgegebenen Lochbild sowie bei einem
zweischaligen Baustein mit einem Spalt zwischen nichtkeramisch verbundener Außen- und
Innenschale, Herstellen einer Mischung aus mikroporösem Wärmedämmstoff, der pyrogene Kieselsäuren und Siliciumdioxid-Aerogele enthält und einem
Organosilan, gegebenenfalls einem Trübungsmittel, Einbringen der Mischung in eine
Formpresse, Trocknen der in die Formpresse eingebrachten Mischung, Einbringen des
getrockneten und formgepressten Produkts in mindestens eines der Löcher und/oder den Spalt des Bausteins umfasst.

20. Verfahren zum Herstellen eines Bausteins gemäß einem der Ansprüche 1 bis 5, 7 bis 11, 13 und 15 bis 18,
**dadurch gekennzeichnet, dass** es die Schritte Herstellen eines einschaligen oder
zweischaligen Bausteins mit im verbauten Zustand vertikal verlaufenden Löchern gemäß
einem vorgegebenen Lochbild sowie bei einem zweischaligen Baustein mit einem Spalt
zwischen nichtkeramisch verbundener Aussen- und Innenschale, Herstellen einer Mischung
aus mikroporösem Wärmedämmstoff, der pyrogene Kieselsäuren und Siliciumdioxid-Aerogele enthält und einem Organosilan gegebenenfalls einem
Trübungsmittel, Einfüllen der Mischung in mindestens eines der Löcher und/oder den Spalt
des Bausteins, Ausüben von Druck, wobei die mit Organosilanen versetzte Mischung direkt in mindest einem der Löcher und/oder dem Spalt verpresst wird, und Trocknenlassen der eingefüllten Mischung umfasst.

## Claims

1. Building blocks and building systems comprising hydrophobic, microporous heat insulation materials, **characterized in that** these heat insulation materials are microporous heat insulation materials which are admixed without binders with organosilanes and immediately after the addition are pressed or compacted to give plates or mouldings and the λ vales are in the range from 0.014 to 0.022 W/mK and the density is in the range from 80 to 300 kg/m³ and the microporous heat insulation materials contain pyrogenic silicas and silicon dioxide aerogels.

2. Building blocks and building systems comprising hydrophobic, microporous heat insulation materials according to Claim 1, **characterized in that** the microporous heat insulation materials have the following composition:
pyrogenic silica/silicon dioxide aerogels 5-98% by weight;
opacifiers 3-40% by weight;
fibres 0-20% by weight.

3. Building blocks and building systems comprising hydrophobic, microporous heat insulation materials according to Claim 1 or 2, **characterized in that** the organosilanes have the formulae Rₙ-Si-X₄₋ₙ, where n = 1, 2 or 3, or R₃Si-Y-SiR₃, where Y is NH or O and R = CH₃; -C₂H₅; and/or H, X = Cl or Br, -OCH₃; -OC₂H₅; -OC₃H₇.

4. Building blocks and building systems comprising hydrophobic, microporous heat insulation materials according to any of Claims 1 to 3, **characterized in that** the hydrophobic, microporous heat insulation materials contain titanium oxides, zirconium oxides, ilmenite, iron titanate, iron oxide, zirconium silicate, silicon carbide, manganese oxide and carbon black, preferably carbon black and silicon carbide, as opacifiers.

5. Building blocks and building systems comprising hydrophobic, microporous heat insulation materials according to any of Claims 1 to 4, **characterized in that** the hydrophobic, microporous heat insulation materials are synthetically produced modifications of silicon dioxide, naturally occurring SiO₂-containing compounds, thermally expanded minerals and also finely divided metal oxides.

6. Use of the building blocks and building systems comprising hydrophobic, microporous heat insulation materials according to any of Claims 1 to 5 as integrated heat insulation.

7. Building blocks and building systems comprising hydrophobic, microporous heat insulation materials according to any of Claims 1 to 5, **characterized in that** the building blocks are hollow building blocks.

8. Building blocks and building systems comprising hydrophobic, microporous heat insulation materials according to any of Claims 1 to 5 and 7, **characterized in that** the building blocks are multishell building blocks.

9. Building blocks and building systems comprising hydrophobic, microporous heat insulation materials according to any of Claims 1 to 5 and 7 to 8, **characterized in that** vacuum insulation panels (VIP) whose enveloping material consists of metal or of polymer are integrated into the building systems.

10. Building blocks and building systems comprising hydrophobic, microporous heat insulation materials according to any of Claims 1 to 5 and 7 to 9, **characterized in that** the building systems consist of composite heat insulation systems.

11. Building blocks and building systems comprising hydrophobic, microporous heat insulation materials according to any of Claims 1 to 5 and 7 to 10, **characterized in that** the building system is a double masonry wall.

12. Use of the building blocks and building systems comprising hydrophobic, microporous heat insulation materials according to Claim 8 in multishell building blocks having integrated heat insulation, wherein the individual building blocks having integrated heat insulation are joined by the joins having a lower thermal conductivity than the building blocks or being built up via frictional joins without heat bridge formation.

13. Building blocks and building systems comprising hydrophobic, microporous heat insulation materials according to Claim 9, **characterized in that** in the case of a double masonry wall the intermediate spaces and in the case of hollow building blocks all or individual hollow spaces are filled with vacuum insulation panels based on microporous heat insulation.

14. Use of the building blocks and building systems comprising hydrophobic, microporous heat insulation materials according to Claim 10 in composite heat insulation systems whose envelopes consist of a pressed, rolled, extruded foam or fibre material or of wood, paperboard, gypsum plasterboard, shrink films, various polymers, nonwovens, glass fibre-reinforced polymers.

15. Building blocks and building systems comprising hydrophobic, microporous heat insulation materials according to Claim 11, **characterized in that** the shell material on one or both sides consists of brick, natural stone, sand-lime brick, concrete blocks and plates, gas concrete block, wood, clinker, calcium silicate plates, gypsum boards, and **in that** masonry anchors and/or connecting bricks are used for reinforcing the construction, with the connecting bricks being able to be hollow building blocks having integrated heat insulation.

16. Building blocks and building systems comprising hydrophobic, microporous heat insulation materials according to any of Claims 1 to 5 and 7 to 11, **characterized in that** the building block (1; 21) is a block having a plurality of holes which in the installed state run vertically (5, 6, 7; 25) and have a prescribed hole pattern, where at least one of the holes is filled with the hydrophobic, microporous heat insulation material.

17. Building blocks and building systems comprising hydrophobic, microporous heat insulation materials according to any of Claims 1 to 5 and 7 to 11, **characterized in that** the building blocks are two-shell building blocks (11) having an outer shell and an inner shell (12, 13) which are joined nonceramically to one another and are separated from one another by a gap filled with the hydrophobic, microporous heat insulation material.

18. Building blocks and building systems comprising hydrophobic, microporous heat insulation materials according to any of Claims 1 to 5, 7 to 11 and 13, **characterized in that** the building block has a plurality of holes which in the installed state run vertically according to a prescribed hole pattern at least on one of the shells and at least one of these holes is filled with the hydrophobic, microporous thermal insulation material.

19. Process for producing a building block according to any of Claims 1 to 5, 7 to 11, 13 and 15 to 18, **characterized in that** it comprises the steps of production of a single-shell or two-shell building block having holes which in the installed state run vertically according to a prescribed hole pattern and also in the case of a two-shell building block having a gap between nonceramically joined outer shell and inner shell, production of a mixture of microporous thermal insulation material which contains pyrogenic silicas and silicon dioxide aerogels and an organosilane, optionally an opacifier, introduction of the mixture into a moulding press, drying of the mixture introduced into the moulding press, introduction of the dried and moulded product into at least one of the holes and/or the gap of the building block.

20. Process for producing a building block according to any of Claims 1 to 5, 7 to 11, 13 and 15 to 18, **characterized in that** it comprises the steps of production of a single-shell or two-shell building block having holes which in the installed state run vertically and have a prescribed hole pattern and also in the case of a two-shell building block having a gap between nonceramically joined outer shell and inner shell, production of a mixture of microporous heat insulation material which contains pyrogenic silicas and silicon dioxide aerogels and an organosilane, optionally an opacifier, introduction of the mixture into at least one of the holes and/or the gap of the building block, exertion of pressure, with the mixture mixed with organosilanes being pressed directly into at least one of the holes and/or the gap, and allowing the introduced mixture to dry.

## Revendications

1. Composants et systèmes de construction comprenant des isolateurs thermiques hydrophobes, microporeux,
**caractérisés en ce que**
ces isolateurs thermiques sont des isolateurs thermiques microporeux, qui sont mélangés sans liant avec des organosilanes et qui, immédiatement après leur ajout, sont pressés ou condensés sous forme de plaques ou de pièces moulées et les valeurs de λ se situent entre 0,014 et 0,022 W/mK et la densité se situe dans la plage de 80 à 300 kg/m³ et
les isolateurs thermiques microporeux contiennent des silices pyrogénées et des aérogels de dioxyde de silicium.

2. Composants et systèmes de construction comprenant des isolateurs thermiques hydrophobes, microporeux selon la revendication 1,
**caractérisés en ce que**
les isolateurs thermiques microporeux possèdent la composition suivante :
silice pyrogénée/aérogels de dioxyde de silicium 5 à 98 % en poids ;
agent opacifiant 3 à 40 % en poids ;
fibres 0 à 20 % en poids.

3. Composants et systèmes de construction comprenant des isolateurs thermiques hydrophobes, microporeux selon la revendication 1 ou 2,
**caractérisés en ce que**
les organosilanes présentent les formules Rₙ-Si-X₄₋ₙ, avec n = 1, 2 ou 3, ou R₃Si-Y-SiR₃, Y étant NH ou O et R = CH₃ ; -C₂H₅ ; et/ou étant H, X = Cl ou Br, -OCH₃ ; -OC₂H₅ ; -OC₃H₇.

4. Composants et systèmes de construction comprenant des isolateurs thermiques hydrophobes, microporeux selon l'une quelconque des revendications 1 à 3,
**caractérisés en ce que**
les isolateurs thermiques hydrophobes, microporeux contiennent, en tant qu'agent opacifiant, des oxydes de titane, des oxydes de zirconium, de l'ilménite, du titanate de fer, de l'oxyde de fer, du silicate de zirconium, du carbure de silicium, de l'oxyde de manganèse et de la suie, de préférence de la suie et du carbure de silicium.

5. Composants et systèmes de construction comprenant des isolateurs thermiques hydrophobes, microporeux selon l'une quelconque des revendications 1 à 4,
**caractérisés en ce que**
les isolateurs thermiques hydrophobes, microporeux sont des modifications préparées synthétiquement de dioxyde de silicium, des composés d'origine naturelle contenant du SiO₂, des minéraux gonflés thermiquement et également des oxydes métalliques finement divisés.

6. Utilisation des composants et systèmes de construction comprenant des isolateurs thermiques hydrophobes, microporeux selon l'une quelconque des revendications 1 à 5 en tant qu'isolation thermique intégrée.

7. Composants et systèmes de construction comprenant des isolateurs thermiques hydrophobes, microporeux selon l'une quelconque des revendications 1 à 5,
**caractérisés en ce que**
les composants sont des composants creux.

8. Composants et systèmes de construction comprenant des isolateurs thermiques hydrophobes, microporeux selon l'une quelconque des revendications 1 à 5 et 7,
**caractérisés en ce que**
les composants sont des composants à plusieurs enveloppes.

9. Composants et systèmes de construction comprenant des isolateurs thermiques hydrophobes, microporeux selon l'une quelconque des revendications 1 à 5 et 7 et 8,
**caractérisés en ce que**
dans les systèmes de construction, des plaques d'isolation sous vide (PIV) sont intégrées, dont le matériau d'enveloppe est constitué de métal ou de plastique.

10. Composants et systèmes de construction comprenant des isolateurs thermiques hydrophobes, microporeux selon l'une quelconque des revendications 1 à 5 et 7 à 9,
**caractérisés en ce que**
les systèmes de construction sont constitués de systèmes composites d'isolateurs thermiques.

11. Composants et systèmes de construction comprenant des isolateurs thermiques hydrophobes, microporeux selon l'une quelconque des revendications 1 à 5 et 7 à 10,
**caractérisés en ce que**
le système de construction est un ouvrage de maçonnerie à deux enveloppes.

12. Utilisation des composants et systèmes de construction comprenant des isolateurs thermiques hydrophobes, microporeux selon la revendication 8 dans des composants à plusieurs enveloppes comportant une isolation thermique intégrée, la jointure des composants individuels comportant une isolation thermique intégrée est réalisée de telle manière, que les jointures présentent une conductivité thermique inférieure aux composants, ou sont construites à l'aide de jointures par adhérence sans formation de ponts thermiques.

13. Composants et systèmes de construction comprenant des isolateurs thermiques hydrophobes, microporeux selon la revendication 9,
**caractérisés en ce que**,
dans des ouvrages de maçonnerie à deux enveloppes, les espaces interstitiels, et dans des composants creux, tous les espaces creux ou des espaces creux individuels sont remplis par des plaques d'isolation sous vide à base d'isolation thermique microporeuse.

14. Utilisation des composants et systèmes de construction comprenant des isolateurs thermiques hydrophobes, microporeux selon la revendication 10 dans des systèmes composites d'isolateurs thermiques, dont les enveloppes sont constituées de matériau compressé, de matériau laminé, ou de matériau extrudé, de matériau de mousse, de matériau fibreux ou sont constituées de bois, de carton, de placoplâtre, de feuilles rétractables, de plastiques divers, de tissus non tissés, de plastiques renforcés par des fibres de verre.

15. Composants et systèmes de construction comprenant des isolateurs thermiques hydrophobes, microporeux selon la revendication 11,
**caractérisés en ce que**,
le matériau d'enveloppe est constitué, d'un ou des deux côtés, par de la brique, de la pierre naturelle, de la brique silico-calcaire, de blocs de béton et de plaques de béton, de bloc de béton cellulaire, de bois, de clinker, de plaques de silicate de calcium, de plaques de gypse et que pour le renforcement de la construction des ancrages d'ouvrage de maçonnerie et/ou des pierres composites sont utilisé(e)s, les pierres composites pouvant être des composants creux comportant une isolation thermique intégrée.

16. Composants et systèmes de construction comprenant des isolateurs thermiques hydrophobes, microporeux selon l'une quelconque des revendications 1 à 5 et 7 à 11,
**caractérisés en ce que**
le composant (1 ; 21) est une pierre présentant à plusieurs trous (5, 6, 7 ; 25) s'étendant verticalement l'état construit selon une configuration de trous prédéterminée, au moins un des trous étant rempli avec l'isolateur thermique hydrophobe, microporeux.

17. Composants et systèmes de construction comprenant des isolateurs thermiques hydrophobes, microporeux selon l'une quelconque des revendications 1 à 5 et 7 à 11,
**caractérisés en ce que**
les composants sont des composants à deux enveloppes (11) comportant une enveloppe externe et une enveloppe interne (12, 13), qui sont jointes ensemble de manière non céramique, et sont espacées l'une de l'autre par une fissure remplie par l'isolateur thermique hydrophobe, microporeux.

18. Composants et systèmes de construction comprenant des isolateurs thermiques hydrophobes, microporeux selon l'une quelconque des revendications 1 à 5 et 7 à 11 et 13,
**caractérisés en ce que**
le composant présente, au moins sur une des enveloppes, plusieurs trous s'étendant verticalement à l'état construit selon une configuration de trous prédéterminée et au moins un de ces trous sont remplis avec l'isolateur thermique hydrophobe, microporeux.

19. Procédé pour la préparation d'un composant selon l'une quelconque des revendications 1 à 5, 7 à 11, 13 et 15 à 18,
**caractérisé en ce qu'**il comprend les étapes de préparation d'un composant à une enveloppe ou à deux enveloppes comportant à l'état construit des trous s'étendant verticalement selon une configuration de trous prédéterminée ainsi que pour un composant à deux enveloppes comportant une fissure entre une enveloppe externe et une enveloppe interne jointes de manière non céramique, préparation d'un mélange composé d'isolateur thermique microporeux qui contient des silices pyrogénées et des aérogels de dioxyde de silicium, et un organosilane, éventuellement un agent opacifiant, introduction du mélange dans une presse de moulage, séchage du mélange introduit dans la presse de moulage, introduction du produit séché et moulé par pressage dans au moins un des trous et/ou dans la fissure du composant.

20. Procédé pour la préparation d'un composant selon l'une quelconque des revendications 1 à 5, 7 à 11, 13 et 15 à 18,
**caractérisé en ce qu'**il comprend les étapes de préparation d'un composant à une enveloppe ou à deux enveloppes comportant à l'état construit des trous s'étendant verticalement selon une configuration de trous prédéterminée ainsi que pour un composant à deux enveloppes comportant une fissure entre une enveloppe externe et une enveloppe interne jointes de manière non céramique, préparation d'un mélange composé d'isolateur thermique microporeux qui contient des silices pyrogénées et des aérogels de dioxyde de silicium, et un organosilane, éventuellement un agent opacifiant, remplissage, avec le mélange, d'un des trous et/ou de la fissure du composant, application d'une pression, le mélange mélangé avec des organosilanes étant directement compressé dans au moins un des trous et/ou la fissure, et le fait de laisser sécher le mélange qui a été introduit.
